# EUROPÄISCHE PATENTSCHRIFT

(11) **EP 1 204 010 B1**
(45) Veröffentlichungstag und Bekanntmachung des Hinweises auf die Patenterteilung: **09.12.2009**
(21) Anmeldenummer: 01125926.4
(22) Anmeldetag: 31.10.2001
(51) Int. Cl.: G05B 23/02

(54) **Verfahren und Einrichtung zur Prozessgesteuerten Anzeige**
Method and device for process-controlled display
Procédé et dispositif pour l'affichage guidé par un processus

(30) Priorität: 04.11.2000 DE 10054751
(43) Veröffentlichungstag der Anmeldung: 08.05.2002
(73) Patentinhaber: ABB AG, 68309 Mannheim (DE)
(72) Erfinder: Conein, Marcus Dipl.-Ing., 40223 Dusseldorf (DE)
(74) Vertreter: Schmidt, Karl Michael

(56) Entgegenhaltungen:
- WO-A-99/63409
- GB-A- 2 294 793
- US-A- 4 648 028
- US-A- 5 719 558
- US-A- 5 859 885

## Beschreibung

Die Erfindung betrifft ein Verfahren sowie eine Einrichtung zur prozeßgesteuerten Anzeige von Prozeßdaten auf einem Display eines Prozeßsteuergerätes gemäß dem Ansprüchen 1 und 4.

Zur Anzeige von Prozeßparametern sind in der Regel Anzeige- oder Displayflächen auf Prozeßreglern angeordnet. Die Prozeßregler zeigen dabei diejenige Größe an, die sie auch im Prozeß ausregeln. Neben der eigentlichen Prozeßführung wird auf den besagten Displayflächen des Reglers Prozeßinformation wiedergegeben. Regler dieser Art, die als sogenannte Kompaktregler in der Prozeßautomatisierung in verschiedensten Industriebereichen eingesetzt werden, geben Prozeßinformationen auf dem Display wieder. Zum einen werden oder können diese Prozeßdaten an eine zentrale Leitstelle übermittelt werden, zum anderen dienen sie jedoch zur Prozeßinformation desjenigen Personals, welches mit der Überwachung des Prozeßablaufes am Orte der einzelnen Prozeßarmaturen befaßt ist. Bei Kompaktreglern mit Display der herkömmlichen Art erfolgt die Wiedergabe der Displayinformation entweder in einer einheitlichen Farbe oder in einem feststehenden Farbmuster.

Treten nun im Prozeß Störungen auf, so werden bei herkömmlichen Kompaktreglern in der Regel Blinkleuchten angesteuert, die einen kritischen Zustand in der Prozeßsteuerung oder gar eine erreichte Fehlfunktion signalisieren sollen.

Problematisch ist hierbei, daß die Displays von den Bedienern zumeist aus größerer Entfernung gelesen werden. Aufblinkende Leuchtpunkte können dabei leicht übersehen werden. Wird dagegen eine solche Fehlermeldung übersehen, so kann bei Weiterführung des Prozesses ein erheblicher Störfall eintreten.

Aus der US 4 648 028 ist eine Einrichtung bekannt, bei welcher eine Störung durch einen Frabwechsel der Anzeige sichtbar gemacht wird. Hierbei erfolgt eine solche Warnmeldung erst bei erfolgter Störung.

Der Erfindung liegt somit die Aufgabe zugrunde, ein Verfahren sowie eine Einrichtung der gattungsgemäßen Art dahingehend zu verbessern, daß Störungen oder Warnungen von Bedienern auch aus größerer Entfernung leichter erkennbar sind.

Bei dem Verfahren der gattungsgemäßen Art wird die gestellte Aufgabe erfindungsgemäß durch die kennzeichnenden Merkmale des Patentanspruches 1 gelöst.

Weitere vorteilhafte Ausgestaltung des erfindungsgemäßen Verfahrens sind in den abhängigen Verfahrensansprüchen 2 bis 3 angegeben.

Im Hinblick auf eine Einrichtung der gattungsgemäßen Art ist die gestellte Aufgabe erfindungsgemäß durch die Merkmale des Patentanspruches 4 gelöst.

Weitere vorteilhafte Ausgestaltungen der erfindungsgemäßen Einrichtung sind in den übrigen Ansprüchen angegeben.

Kern der verfahrensgemäßen Erfindung ist, daß ein Wechsel der Anzeige oder Hinterleuchtungsfarbe der gesamten Displayanzeige ereignisgesteuert generiert wird und dass abhängig zu verschiedenen Statii einer Störmeldung bereits im Anbahnungsstatus einer Störung ein periodischer Wechsel zwischen einer Betriebsgrundhinterleuchtungsfarbe und der Warn- oder Alarmmeldungsfarbe generiert wird. Auch dies ist aus großer Entfernung deutlich zu erkennen, da sich die beiden Farben zwischen dem Normalzustand und dem Alarm- oder Warnzustand deutlich unterscheiden. Ein abwechselndes Blinken zwischen den beiden Farben deutet somit dem Bediener diesen Zustand sicher an.
Hierdurch können verschiedene ereignisbezogene Zustände im Prozeß auch aus großer Entfernung erkannt werden, da diese nicht mehr nur mit kleinen Warnleuchtpunkten angezeigt werden.

In weiterer vorteilhafter Ausgestaltung ist angegeben, daß als solches Ereignis, welches Basis eines Wechsels der Hinterleuchtungsfarbe ist, ein Störfall sein kann. Hierbei werden für den Störfall Farben ausgewählt, die signifikant sind und sich von der Hinterleuchtungsfarbe im normalen Betriebszustand deutlich unterscheiden.

In weiterer vorteilhafter Ausgestaltung ist angegeben, daß die besagte Alarmfarbe für die Hinterleuchtung im Störfall die Farbe Rot ist. Diese Farbe ist signifikant und kontrastreich und hebt sich beispielsweise von der Grundfarbe, die grau oder grün sein kann, deutlich ab.

Zur Realisierung, also zur Durchführung des erfindungsgemäßen Verfahrens besteht der Kern der einrichtungsgemäßen Erfindung darin, daß eine Farbumschaltung des Displays in Abhängigkeit zum Erhalt einer Warn- oder Alarmstatusmeldung generierbar ist.

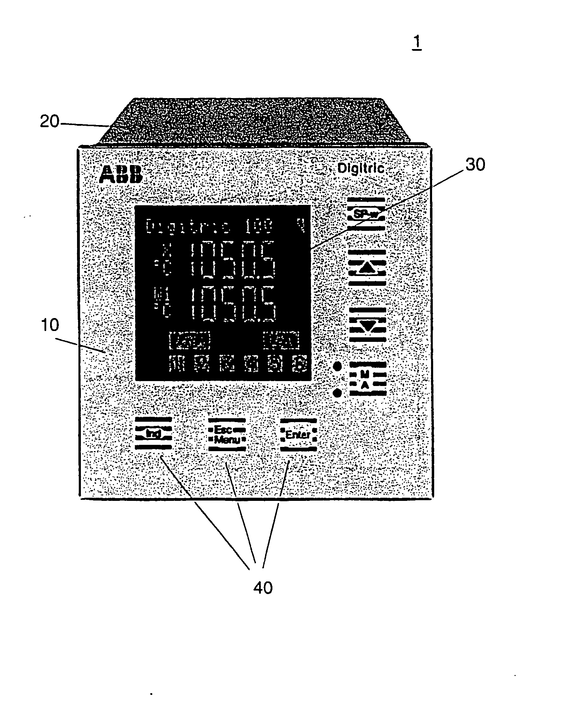

In weiterer vorteilhafter Ausgestaltung ist angegeben, daß ein entsprechendes Display wiederum aus zwei parallelen, sozusagen ineinander verschachtelten LED- oder LCD - Punktfeldern auf einer Platine realisiert sein kann. Dabei ist beispielsweise eine Matrix roter LEDs oder LCDs und eine Matrix grüner LEDs bzw LCDs, die getrennt ansteuerbar sind, auf ein und derselben Platine ineinander geschachtelt angeordnet. Auf diese Weise ist eine leichte Farbumschaltung zwischen den Betriebsfarben grün und rot möglich. Die Erfindung ist in der Zeichnung dargestellt und nachfolgend näher beschrieben.

Die Zeichnung stellt am Beispiel einer temperaturgeführten Prozeßregelung die Anzeigefläche eines Kompaktreglers 1 dar. Innerhalb dem sich quasi hinter der Anzeige- und Betätigungsfläche 10 erstreckenden Gehäuseraum 20 des Kompaktreglers 1 sind die elektronischen Regler oder Regelelemente angeordnet, die hier nicht weiter dargestellt sind. Auf der Frontseite, die auch das Display 30 enthält, sind neben der Displayfläche auch noch Tastflächen 40 zur Eingriffnahme und zur Einstellung bestimmter Werte vorhanden. Kompaktregler als solches können somit in gewisser Weise auch manuell gesteuert bzw. die entsprechenden Werte manuell korrigiert werden. Überdies verfügen Kompaktregler dieser Art jedoch auch über elektronische Schnittstellen zum externen Ansteuern über einen Prozeßrechner. Dennoch sind in der Prozeßanlage, in der solche Kompaktregler verteilt an den entsprechenden Armaturen plaziert sind, Bedienpersonen unterwegs, die den Prozeß als solches auf Störungsfreiheit kontrollieren. Wichtig und erfindungswesentlich ist hierbei nun, daß das eigentliche Display 30 zwar für einen relativen Nahbereich ausgelegt ist, aber der Stör- oder Warnstatus für den Bediener auch aus großer Entfernung erkennbar sein muß. Aus diesem Grund wechselt die Hinterleuchtungsfarbe des Displays 30 in diesem, hier leider nur schwarzweiß darstellbaren Beispiel zwischen den Farben grün und rot. Im Anbahnungsstatus einer Störung, das heißt in einem zuvorigen Warnstatus kann beispielsweise auch blinkender Wechsel zwischen den beiden Hinterleuchtungsfarben, beispielsweise grün und rot, gewählt werden. Bei Erreichen eines Alarms oder eines tatsächlichen Störfalles in der Prozeßsteuerung kann dabei die Hinterleuchtungsfarbe auch dauerhaft von der zuvor im Betriebszustand gewählten grünen Hinterleuchtungsfarbe zur roten Hinterleuchtungsfarbe gewechselt werden, so lange, bis die Störung manuell oder elektronisch beseitigt ist.

Der Warn- und/oder der Alarmstatus kann somit für den Bediener aus großer Entfernung bereits erkannt werden, und er kann sodann sich zu dem betreffenden Kompaktregler hin bewegen, um entweder die Störung zu beseitigen, oder die Ursache der Störung abzufragen und zu beseitigen.

## Patentansprüche

1. Verfahren zur prozeßgesteuerten Anzeige von Prozeßdaten auf einem Display eines Prozeßsteuergerätes, wobei ein Wechsel der Anzeige der Hinterleuchtungsfarbe der gesamten Displayanzeige ereignisgesteuert generiert wird,
**dadurch gekennzeichnet,**
**daß** abhängig zu verschiedenen Statii einer Störmeldung bereits im Anbahnungsstatus einer Störung ein periodischer Wechsel zwischen einer Betriebsgrundfarbe und der Warn- oder Alarmmeldungsfarbe generiert wird.

2. Verfahren nach Anspruch 1,
**dadurch gekennzeichnet,**
**daß** das Ereignis eine Störung und/oder eine Warnung im Prozeßablauf ist.

3. Verfahren nach einem der vorhergehenden Ansprüche,
**dadurch gekennzeichnet,**
**daß** die Alarm- oder Warnfarbe rot ist.

4. Einrichtung zur prozeßgesteuerten Anzeige von Prozeßdaten auf einem Display eines Prozeßsteuergerätes, beispielsweise eines Kompaktreglers, die zur Ausführung des Verfahrens nach Anspruch 1 ausgebildet ist,
wobei die Farbumschaltung des Displays (30) des Prozeßsteuergerätes, d.h. des Kompaktreglers (1) über Warn- oder Alarmsignale generierbar ist, wobei
das Display (30) aus mehreren ineinander geschachtelten Matrizen von Leuchtdioden vom LED-typ bzw LCD-typ besteht, wobei die eine Matrix rote LEDs bzw LCDs und die andere Matrix grüne LEDs bzw LCDs enthält, welche getrennt ansteuerbar sind, und das Hinterleuchtungsfeld des Displays (30) ausmachen.

5. Einrichtung nach Anspruch 4,
**dadurch gekennzeichnet,**
**daß** das Display (30) auf dem Prozeßsteuergerät ein Farbdisplay ist.

## Claims

1. Method for the process-controlled display of process data on a display of a process controller, a change in the display of the backlighting colour of the entire display being generated in an event-controlled manner,
**characterized in that**
a periodic change between a basic operating colour and the warning or alarm message colour is generated as early as in the initiation status of a fault depending on different statuses of a fault message.

2. Method according to Claim 1,
**characterized in that**
the event is a fault and/or a warning in the process sequence.

3. Method according to one of the preceding claims,
**characterized in that**
the alarm or warning colour is red.

4. Device for the process-controlled display of process data on a display of a process controller, for example a compact controller, which is designed to carry out the method according to Claim 1, the colour change of the display (30) of the process controller, that is to say of the compact controller (1), being able to be generated using warning or alarm signals, the display (30) comprising a plurality of interleaved matrices of light-emitting diodes of the LED or LCD type, one matrix containing red LEDs or LCDs and the other matrix containing green LEDs or LCDs which can be driven separately and constitute the backlighting field of the display (30).

5. Device according to Claim 4,
**characterized in that**
the display (30) on the process controller is a colour display.

## Revendications

1. Procédé d'affichage commandé par processus de données de processus sur un afficheur d'un contrôleur de processus, un changement d'affichage de la couleur de rétroéclairage de l'ensemble de l'afficheur étant généré par un événement, **caractérisé en ce qu'**un changement périodique entre une couleur de base de fonctionnement et la couleur d'alerte ou d'alarme est généré en fonction des différents statuts d'un message de défaut déjà dans la phase d'amorçage d'un défaut.

2. Procédé selon la revendication 1, **caractérisé en ce que** l'événement est un défaut et/ou une alerte dans le déroulement du processus.

3. Procédé selon l'une des revendications précédentes, **caractérisé en ce que** la couleur d'alarme ou d'alerte est le rouge.

4. Dispositif d'affichage commandé par processus de données de processus sur un afficheur d'un contrôleur de processus, par exemple un régulateur compact, qui est conçu pour mettre en oeuvre le procédé selon la revendication 1, le changement de couleur de l'afficheur (30) du contrôleur de processus, c'est-à-dire du régulateur compact (1), pouvant être généré par des signaux d'alerte ou d'alarme, l'afficheur (30) se composant de plusieurs matrices de diodes électroluminescentes imbriquées les unes dans les autres de type LED ou de type LCD, une matrice contenant des LED ou des LCD rouges et l'autre matrice des LED ou des LCD vertes, lesquelles peuvent être commandées séparément et forment le panneau de rétroéclairage de l'afficheur (30).

5. Dispositif selon la revendication 4, **caractérisé en ce que** l'afficheur (30) sur le contrôleur de processus est un afficheur en couleur.
